# EUROPÄISCHE PATENTSCHRIFT

(11) **EP 1 714 855 B1**
(45) Veröffentlichungstag und Bekanntmachung des Hinweises auf die Patenterteilung: **28.01.2009**
(21) Anmeldenummer: 06005815.3
(22) Anmeldetag: 22.03.2006
(51) Int. Cl.: B62D 25/00, B62D 29/00

(54) **Kraftfahrzeugkarosserie**
Motor vehicle body
Carrosserie de véhicule automobile

(30) Priorität: 23.04.2005 DE 102005018976
(43) Veröffentlichungstag der Anmeldung: 25.10.2006
(73) Patentinhaber: Bayerische Motoren Werke Aktiengesellschaft, 80809 München (DE)
(72) Erfinder: Ahlers, Michael, 80807 München (DE)

(56) Entgegenhaltungen:
- EP-A1- 0 119 131
- EP-A1- 1 083 115
- WO-A-02/26550
- WO-A-97/30882
- WO-A-20/04076266
- DE-C1- 3 905 650
- DE-C1- 10 214 372
- US-B1- 6 406 078

## Beschreibung

Die Erfindung betrifft eine Kraftfahrzeugkarosserie mit zumindest einem tragenden Bauteil.

Aus der EP 0 119 131 B1 ist ein zusammengesetztes tragendes Bauteil einer Kraftfahrzeugkarosserie bekannt, zu dessen Herstellung ein verformtes Metallteil zumindest teilweise mit verstärktem Kunststoff umspritzt wird

Die WO 02/26550 A1 bildet den nächstliegenden Stand der Technik und beschreibt eine Kraftfahrzeugkarosserie mit zumindest einem tragenden Bauteil, das durch ein hochfestes umgeformtes Stahlblech und durch zumindest ein weiteres Bauelement, das mit dem Stahlblech verbunden ist, gebildet wird.

Aufgabe der Erfindung ist es, eine Kraftfahrzeugkarosserie zu schaffen, die zumindest ein tragendes Bauteil aufweist, das gegenüber bekannten tragenden Bauteilen bei gleicher Festigkeit und Steifigkeit besonders leicht ist.

Diese Aufgabe wird mit einer Kraftfahrzeugkarosserie mit zumindest einem tragenden Bauteil mit den Merkmalen des Patentanspruchs 1 gelöst.

Erfindungsgemäß wird zumindest ein tragendes Bauteil einer Kraftfahrzeugkarosserie durch ein hochfestes Stahlblech und zumindest einem weiteren Bauelement gebildet, das mit dem Stahlblech verbunden ist. Das Stahlblech ist ausschließlich entsprechend der erforderlichen Festigkeit ausgelegt. Erst durch die Verbindung des Stahlblechs mit dem weiteren Bauelement erreicht das tragende Bauteil die erforderliche Steifigkeit.

Bisher wurde jedes tragende Blechbauteil einer Kraftfahrzeugkarosserie so ausgelegt, dass es gleichzeitig die erforderliche Festigkeit und die erforderliche Steifigkeit erfüllt. Die Festigkeit, die letztendlich auch die Crasheigenschaften maßgeblich beeinflusst, wird dabei vor allem durch die Dicke des Stahlblechs und die Streckgrenze der Stahlsorte des Stahlblechs bestimmt. Die Steifigkeit dagegen wird vor allem durch den E-Modul der Stahlsorte und ebenfalls durch die Dicke beeinflusst. Daraus resultiert im Karosseriebau im allgemeinen eine gewisse Mindestblechdicke von aktuell etwa 0,7 mm, damit das Blechbauteil alle Festigkeits-und Steifigkeitsanforderungen erfüllen kann. Entsprechend dieser Erfindung wird dagegen das Stahlblech ausschließlich entsprechend der erforderlichen Festigkeit ausgelegt. Dadurch können deutlich dünnere Stahlbleche mit einer höheren Streckgrenze verwendet werden. Allerdings erfüllt dieses umgeformte Stahlblech noch nicht die Anforderungen an die Steifigkeit des tragenden Bauteils. Um nun auch die Steifigkeit zu erreichen, wird das Stahlblech mit zumindest einem weiteren Bauelement verbunden. Das so gebildete tragende Bauteil ist deutlich leichter als ein konventionelles reines Blechbauteil, das alternativ an derselben Stelle der Fahrzeugkarosserie verwendet werden könnte.

Das weitere Bauelement besteht aus Kunststoff und wird stoffschlüssig und / oder formschlüssig auf das Stahlblech aufgespritzt. Der Verbund aus dem umgeformten Stahlblech mit dem aufgespritzten Bauelement aus Kunststoff erfüllt nun auch die Anforderungen an die Steifigkeit. Zudem kann das Bauelement dazu beitragen, dass das so gebildete Bauteil in Hybridbauweise auch Anforderungen an die Dynamik und / oder Akustik erfüllt. Das aufgespritzte Bauelement aus Kunststoff kann zudem einteilig integrierte Halter, Aufnahmen und / oder Befestigungspunkte aufweisen, sodass bei einer konventionellen Karosserie in Blechbauweise dafür erforderliche separate Bauteile entfallen können. Beispielsweise können konventionelle Anbaubauteile wie eine Unterbodenverkleidung zumindest teilweise als weitere Bauelemente angespritzt werden und so eine mittragende Funktion übernehmen.

Als Kunststoffsorten eignen sich generell alle Thermoplaste und Duroplaste. Jede Kunststoffsorte weist dabei einen hohen Anteil an Glasfasern und / oder Glaskugeln von 30 % oder mehr auf. Das Verhältnis zwischen E-Modul und Dichte des Kunststoffs sollte dabei so hoch wie möglich sein. Bevorzugt hält die gewählte Kunststoffsorte die hohen Temperaturen beim Lackieren der Fahrzeugkarosserie nicht nur aus, sondern härtet bei den hohen Temperaturen beim Lackieren noch zusätzlich aus. Es können auch mehrere Stahlbleche gemeinsam mit einem weiteren Bauelement aus Kunststoff umspritzt werden, sodass ein homogener Steifigkeitsverlauf über die Trennstellen der Stahlbleche hinaus entsteht. Durch die Integration von Spritzgießmaschinen in den Rohbau kann die erforderliche Logistik vereinfacht werden. Zudem weisen Spritzgießmaschinen ähnlich wie im sonstigen Karosserierohbau Taktzeiten von ca. 60 Sekunden auf.

Das aufgespritzte Bauelement kann entsprechend der gestellten Anforderungen dimensioniert werden. So kann es beispielsweise bei hohen Steifigkeitsanforderungen Verstärkungsrippen aufweisen, die das Bauteil besonders versteifen. Von Vorteil ist dabei auch eine möglichst flächige Verbindung des Bauelements mit dem umgeformten Stahlblech. Bevorzugt kann dadurch die Anzahl der erforderlichen Schweißpunkte zum Verbinden der einzelnen Karosseriebauteile zur Bildung der Fahrzeugkarosserie reduziert werden. Bei besonders hohen Steifigkeitsanforderungen kann das tragende Bauteil zusätzlich ausgeschäumt werden.

Alternativ kann das weitere Bauelement eine Strebe sein, die am hochfesten, umgeformten Stahlblech angebracht wird, die mit ihrem anderen Ende an einem anderen Karosseriebauteil angebunden ist. Dadurch erhalten die beiden mit der Strebe verbundenen Karosseriebauteile im Verbund die erforderliche Steifigkeit. Derartige Streben können auch zur Variantenbildung einer Kraftfahrzeugkarosserie verwendet werden: So kann die Kraftfahrzeugkarosserie eines Cabrios im wesentlichen der Karosserie der dazugehörigen Limousine entsprechen. Zur Kompensation der Steifigkeitseinbussen aufgrund des fehlenden Fahrzeugdachs kommen dafür mehrere Streben zum Einsatz, die als zusätzliche Lastpfade die Steifigkeitseinbussen kompensieren.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: einer perspektivische Ansicht einer Fahrzeugkarosserie eines Personenkraftwagens aus einem Blickwinkel leicht von unten,
- Fig. 2: eine perspektivische Ansicht der Fahrzeugkarosserie aus Fig. 1 von der Sei- te und
- Fig. 3: eine Ansicht der Fahrzeugkarosserie aus Fig. 1 von oben.

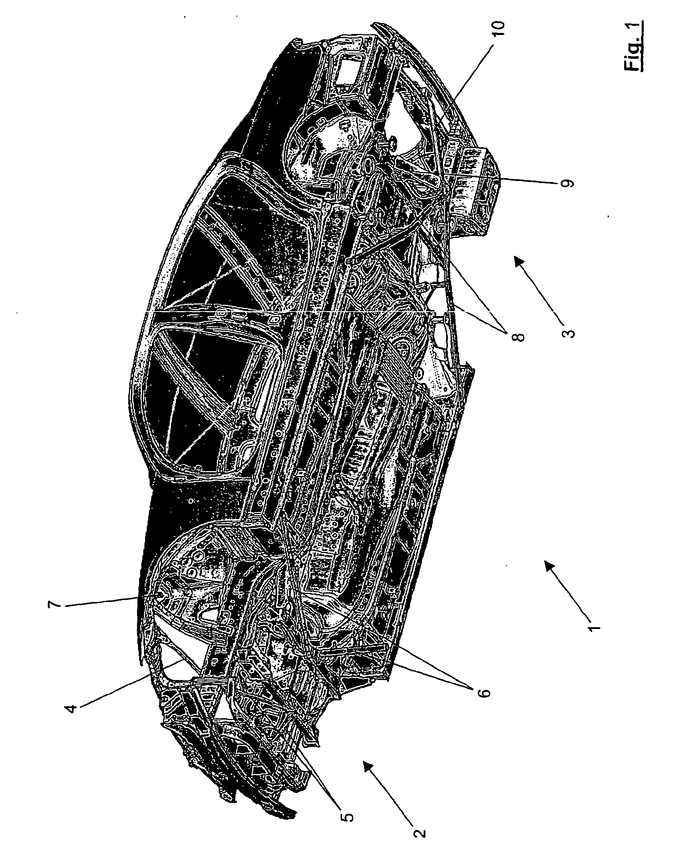

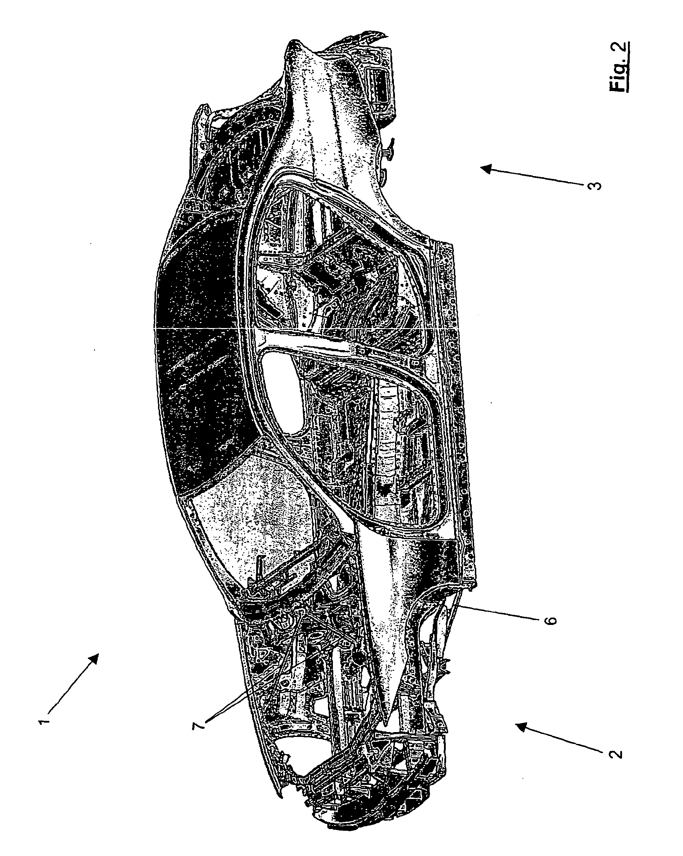

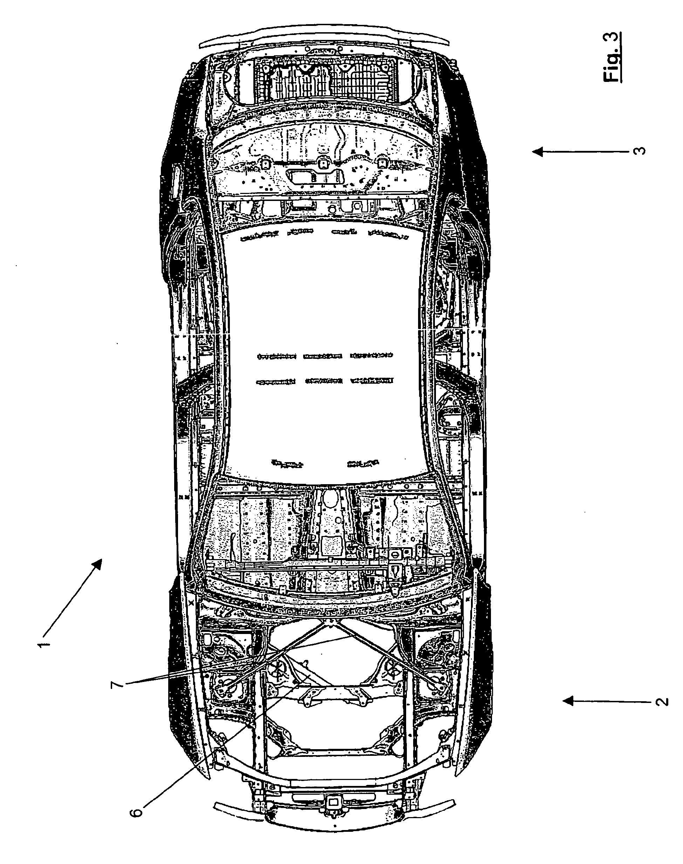

In den Figuren Fig. 1, Fig. 2 und Fig. 3 ist eine Fahrzeugkarosserie 1 dargestellt, die größtenteils aus hochfesten Stahlblechen mit einer Streckgrenze R_{p0,2} von 300 MPa oder höher besteht. Im Bereich des Vorder- und des Hinterwagens 2 und 3 der Fahrzeugkarosserie 1 weisen einige dieser Stahlbleche eine Blechdicke von teilweise 0,6 mm und teilweise 0,5 mm oder weniger auf. Diese dünnen Stahlbleche wurden ausschließlich entsprechend ihrer jeweiligen tragenden Funktion auf die erforderliche Festigkeit ausgelegt, um mit minimalem Gewicht gute Crasheigenschaften der Fahrzeugkarosserie sicherzustellen. Allerdings weist der Vorder- und der Hinterwagen 2 und 3 aufgrund der geringen Blechdicke einiger Stahlbleche keine ausreichende Steifigkeit auf.

Um die notwendige Steifigkeit zu gewährleisten, ist an diesen dünnen Stahlblechen jeweils eine Strebe angebunden, die mit ihrem anderen Ende an einem anderen Karosseriebauteil verbunden ist. So sind die beiden Federdome des Vorderwagens 2 über eine Federdomstrebe 4 jeweils mit der Mitte des unteren Windlaufs verbunden. Der vordere Achsträger ist über zwei diagonal zur Seite und nach hinten verlaufende Streben 6 mit den Seitenschwellern und über zwei diagonal zur Seite und nach oben verlaufende Streben 5 mit dem Motorträger verbunden. Vom Anbindungsbereich der Streben 5 am Motorträger verlaufen zudem zwei weitere Streben 4 zum Federdom. Alle Streben 4, 5, 6 und 7 im Vorderwagen 2 erhöhen die statische Torsionssteifigkeit der Fahrzeugkarosserie. Auch die Diagonalstreben 8 bzw. 9 zwischen der hinteren Achsaufnahme und den Seitenschwellern bzw. einem hinteren Karosseriequerträger dienen zur Verbesserung der statischen Torsionssteifigkeit. Die hintere Zugstrebe 10 im Hinterwagen 3 dient zur Erhöhung der statischen Torsionssteifigkeit, zur Verbesserung der Akustik und zur Verringerung einer Heckbiegung der Fahrzeugkarosserie 1.

Durch die konsequente Auslegung einiger tragender Stahlbleche der Fahrzeugkarosserie 1 ausschließlich entsprechend der erforderlichen Festigkeit und das Verbinden dieser Stahlbleche mit zumindest einem weiteren Bauelement zur Erreichung der Steifigkeitsanforderungen können deutlich dünnere Stahlbleche aus höchstfesten Stahlsorten zum Einsatz kommen. Die weiteren Bauteile sind hier die Streben 4, 5, 6 und 7 im Vorderwagen 2 und die Streben 8, 9 und 10 im Hinterwagen 3. Die dabei gegenüber einer konventionellen Karosserie erzielten Gewichtsvorteile sind so groß, dass trotz der erforderlichen zusätzlichen Bauelemente eine deutliche Gewichtsersparnis der gesamten Fahrzeugkarosserie 1 realisiert werden kann.

## Patentansprüche

1. Kraftfahrzeugkarosserie (1) mit zumindest einem tragenden Bauteil, das gebildet wird durch ein hochfestes Stahlblech mit einer Streckgrenze R_{p0,2} von 300 MPa oder höher, das ausschließlich entsprechend der erforderlichen Festigkeit ausgelegt ist, und durch zumindest ein weiteres Bauelement, das mit dem Stahlblech verbunden ist, um die erforderliche Steifigkeit des tragenden Bauteils zu erreichen, wobei die Steifigkeitsziele **dadurch** erreicht werden, dass das eine weitere Bauetement aus Kunststoff besteht und auf hochfeste, umgeformte Stahlblech aufgespritzt wird, wobei der Kunststoff einen hohen Anteil an Glasfasern und /oder Glaskugeln von 30% oder mehr aufweist.

2. Kraftfahrzeugkarosserie (1) nach Anspruch 1, **dadurch gekennzeichnet, dass** das hochfeste Stahlblech eine Blechdicke von 0,6 mm oder weniger aufweist.

3. Kraftfahrzeugkarosserie (1) nach Anspruch 2, **dadurch gekennzeichnet, dass** das hochfeste Stahlblech eine Blechdicke von 0,5 mm oder weniger aufweist.

4. Kraftfahrzeugkarosserie (1) nach einem der vorhergehenden Ansprüche, **dadurch gekennzeichnet, dass** das weitere, aufgespritzte Kunststoffelement Verstärkungsrippen aufweist.

5. Kraftfahrzeugkarosserie (1) nach einem der vorhergehenden Ansprüche, **dadurch gekennzeichnet, dass** die Steifigkeitsziele **dadurch** erreicht werden, dass zumindest eine Strebe (4, 5, 6, 7, 8, 9, 10) als weiteres Bauelement am hochfesten, umgeformten Stahlblech angebracht wird, die mit ihrem anderen Ende an einem anderen Karosseriebauteil angebunden ist.

## Claims

1. A motor vehicle body (1) comprising at least one bearing part in the form of a high-strength steel sheet with an elastic limit (R_{p0.2}) of 300 MPa or higher and designed exclusively in accordance with the required strength, and also comprising at least one additional component connected to the steel sheet in order to give the bearing part the required strength, wherein the target strength is obtained in that the at least one additional component is made of plastics material and is injected on to the high-strength steel sheet, shaped without cutting, wherein the plastics material has a high content of 30% or more glass fibres and/or glass beads.

2. A motor vehicle body (1) according to claim 1, **characterised in that** the high-strength steel sheet has a thickness of 0.6 mm or less.

3. A motor vehicle body (1) according to claim 2, **characterised in that** the high-strength steel sheet has a thickness of 0.5 mm or less.

4. A motor vehicle body (1) according to any of the preceding claims, **characterised in that** the additional injected plastics material element has reinforcing ribs.

5. A motor vehicle body (1) according to any of the preceding claims, **characterised in that** the target stiffness is obtained **in that** at least one additional component in the form of a strut (4, 5, 6, 7, 8, 9, 10) is attached to the high-strength shaped steel sheet and its other end is connected to another part of the body.

## Revendications

1. Carrosserie de véhicule automobile (1) comportant au moins une caisse porteuse réalisée en une tôle d'acier très résistante ayant une limite d'allongement R_{p0.2}, de 300 Mpa ou plus, conçue exclusivement selon la résistance requise et par au moins un autre composant relié à la tôle d'acier pour obtenir une pièce porteuse, ayant la rigidité requise, les valeurs de rigidité étant obtenues en ce qu'au moins un autre composant, réalisé en matière plastique, est surmoulé par injection sur la tôle d'acier très résistante mise en forme, la matière plastique ayant une forte teneur en fibres de verre et/ou en billes de verre, de 30 % ou plus.

2. Carrosserie de véhicule automobile (1) selon la revendication 1,
**caractérisée en ce que**
la tôle d'acier très résistante a une épaisseur de 0,6 mm ou moins.

3. Carrosserie de véhicule automobile (1) selon la revendication 2,
**caractérisée en ce que**
la tôle d'acier très résistante a une épaisseur de 0,5 mm ou moins.

4. Carrosserie de véhicule automobile (1) selon les revendications précédentes,
**caractérisée en ce que**
l'autre élément en matière plastique, réalisé par injection, comporte des nervures de renforcement.

5. Carrosserie de véhicule automobile (1) selon les revendications précédentes,
**caractérisée en ce que**
les valeurs de rigidité fixées s'obtiennent en prévoyant au moins une entretoise (4, 5, 6, 7, 8, 9, 10) comme autre composant sur la tôle d'acier très résistante mise en forme, et dont l'autre extrémité est fixée à une autre pièce de la carrosserie.
